Europäisches Patentamt

European Patent Office

Office européen des brevets

(19)

(11) Veröffentlichungsnummer: **0 002 291**
**A2**

(12) **EUROPÄISCHE PATENTANMELDUNG**

(21) Anmeldenummer: **78200293.5**

(22) Anmeldetag: **08.11.78**

(51) Int. Cl.²: **B 28 D 1/14**
**F 16 L 41/04, E 01 C 23/04**

(30) Priorität: **16.11.77 BE 860831**

(43) Veröffentlichungstag der Anmeldung:
**13.06.79 Patentblatt 79/12**

(84) Benannte Vertragsstaaten:
**DE FR GB NL**

(71) Anmelder: **VANDAELE GEBROEDERS**
**personenvennootschap met beperkte aansprakelijkheid**
**Stationsstraat 115-117**
**B-8780 Oostrozebeke(BE)**

(72) Erfinder: **Vandaele, Robert Ghislain**
**Stationsstraat 117**
**B-8780 Oostrozebeke(BE)**

(72) Erfinder: **Vandaele, Roland Jules**
**Stationsstraat 115**
**B-8780 Oostrozebeke(BE)**

(74) Vertreter: **Bocksteel, Marius Florimond Jean et al,**
**Arenbergstraat 13**
**B-2000 Anvers(BE)**

(54) **Hydraulische Kernbohrvorrichtung.**

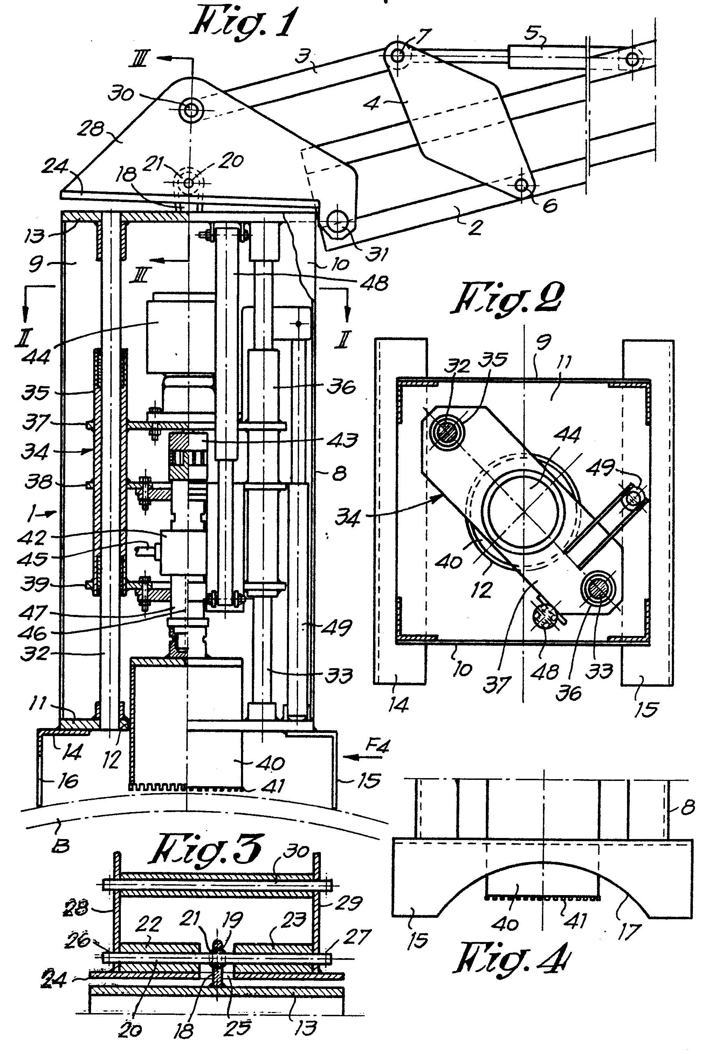

(57) Hydraulische Kernbohrvorrichtung mit dem Kennzeichen, dass sie hauptsächlich besteht aus der Kombination eine Gerippes, von Mitteln, die dieses Gerippe einstellbar an die Arme einer Baggermaschine oder dergleichen befestigen, Mitteln, die es ermöglichen, das Gerippe in geeigneter Weise in Position zu bringen im Verhältnis zu dem Rohr oder dergleichen, worin ein Loch angebracht werden muss, und senkrecht bewegbar auf dem obengenannten Gerippe einem hohlen Kernbohrer, wobei letzterer durch einen Wassermotor angetrieben wird und zusammen mit diesem Motor auf einen Schlitten gestellt ist, wovon der Höhenstand positiv gesteuert wird. Abbildung 1.

EP 0 002 291 A2

# Fig. 1

- 1 -

## Hydraulische Kernbohrvorrichtung.

Diese Erfindung bezieht sich auf eine hydraulische Kernbohrvorrichtung, mit anderen Worten eine Vorrichtung, womit es möglich ist, in Rohren wie zum Beispiel Kanalisationsrohren oder dergleichen an der Stelle, wohin Anschlüsse kommen müssen, auf geeignete Weise Löcher zu bohren, um diese Anschlüsse so sauber und zweckentsprechend wie möglich ausführen zu können.

Obwohl diese Kernbohrvorrichtung spezieller dazu bestimmt ist, Löcher in Rohre, spezieller noch in Betonkanalisationsrohren zu bohren, kann diese selbstverständlich auch für Kernbohrungen in neu angelegten Betonstrassen, Asphaltstrassen und dergleichen gebraucht werden, um auf diese Weise Probestücke zu bekommen.

Es ist bekannt, dass bisher die Löcher in Kanalisationsrohren und dergleichen für den Anschluss von kleineren Rohren im allgemeinen durch Ausschlagen verwirklicht werden, wodurch eine unsaubere Öffnung erreicht wird, wobei im allgemeinen im Kanalisationsrohr Betonstücke zurückbleiben, wodurch später Aufstauungen verursacht werden können, und wobei die grosse Gefahr bei diesem Ausschlagen darin besteht, dass das Kanalisationsrohr reisst mit allen Folgen davon.

Ebenfalls lässt das wasserdichte Anschliessen des kleineren Rohres an das grössere Rohr mit dieser Methode viel zu wünschen übrig. In der Tat bröckelt die für das Anschliessen gebrauchte Materie später häufig ab oder wird diese Materie unzweckmässig oder in einigen Fällen garnicht angebracht, wodurch Erde in das Kanalisationsrohr eindringt.

Um diese obengenannten Nachteile zu vermeiden, hat man bereits vorgeschlagen, in solche Kanalisationsrohre Löcher zu bohren, die einen geeigneten Durchmesser haben im Verhältnis zum Durchmesser der hieran anzuschliessenden kleineren Rohre, wobei die Verbindung zwischen dem kleineren Rohr und dem eigentlichen Kanalisationsrohr mittels einer Gummidichtung erfolgt.

Diese Erfindung bezieht sich demnach auf eine Vorrichtung,die es ermöglicht, solche Löcher in Kanalisationsrohre und dergleichen zu bohren, und zwar an gleich welcher Stelle und in gleich welcher Lage, in der sich das Rohr befindet, mit anderen Worten auch und vor allem wenn das Kanalisationsrohr in seiner Bettung liegt, und wobei diese Bohrung ausgeführt werden kann, während die Vorrichtung gemäss der Erfindung auf einem Arm einer geeigneten Bedienungsmaschine, zum Beispiel dem Arm einer Baggermaschine, befestigt ist.

Die Vorrichtung, die die obengenannten und andere Vorteile hat, besteht zu diesem Zweck aus der Kombination eines Gerippes; Mitteln, die dieses Gerippe einstellbar befestigen an die Arme einer Baggermaschine oder dergleichen; Mitteln, die es ermöglichen, das Gerippe auf geeignete Weise in Position zu bringen in Hinsicht auf das Rohr oder dergleichen, worin ein Loch angebracht werden muss; und senkrecht verstellbar in dem obengenannten Gerippe einem hohlen Kernbohrer, wobei letzterer durch einen hydraulischen Motor angetrieben wird und zusammen mit diesem Motor auf einen Schlitten gestellt ist, dessen Höhenstand positiv betätigt wird.

Zu dem Zweck, die Merkmale der Erfindung besser zu zeigen,ist nachstehend als Beispiel ohne irgendwelchen einschränkenden Charakter eine bevorzugte Ausführungsform beschrieben mit Hinweis auf die beigefügten Zeichnungen, worin

Abbildung 1 eine Seitenansicht mit teilweisem Querschnitt einer Kernbohrvorrichtung gemäss der Erfindung wiedergibt;

Abbildungen 2 und 3 respektive Querschnitte nach den Linien II-II und III-III in Abbildung 1 wiedergeben;

Abbildung 4 eine Sicht gemäss Pfeil F4 in Abbildung 1 ist.

Die Vorrichtung 1 wie in den beigefügten Abbildungen wiedergegeben ist dazu bestimmt, mit einer hydraulischen Hebevorrichtung, insbesondere einer hydraulischen Baggermaschine, gebraucht zu werden. Diese Vorrichtung 1 ist in den beigefügten Abbildungen an einer solchen Baggermaschine aufgehängt, die in diesem Fall von einem eigentlichen Tragarm 2, einem Steuerarm 3, einem Zwischenstück 4 und dem zwischen dem oberen Ende des Tragarmes 2 und dem Steuerarm 3 angebrachten Druckzylinder 5 gebildet wird.

Das Zwischenstück 4 ist mit dem Tragarm durch eine Spindel 6 verbunden, während der Steuerarm 3 einerseits mit dem Zwischenstück 4 und andererseits mit dem Druckzylinder 5 durch eine Spindel 7 verbunden ist.

Die Vorrichtung gemäss der Erfindung besteht hauptsächlich aus einem Gerüppe 8, das in diesem Fall aus zwei Seitenwänden 9 und 10 gebildet ist, die unten miteinander verbunden sind durch eine Platte 11 mit darin einem kreisförmigen Loch 12, während diese beiden Seitenwände 9 und 10 oben durch eine Platte 13 miteinander verbunden sind.

Unter der obengenannten Platte 11 sind auf jeder Seite der Vorrichtung noch zwei L-Profile vorgesehen, respektive 14 und 15, worin Aushöhlungen 16 und 17 angebracht sind.

Mit der obengenannten Platte 13 ist oben ein Vorsprung 18 verbunden, zum Beispiel durch Laschen, worin eine kreisförmige Öffnung 19 angebracht ist, die innen kugelförmig ausgehöhlt ist, um mit einem auf einer Welle 20 angebrachten kugelförmigen Element 21 zusammenwirken zu können. Die Welle 20 ist ferner frei drehbar in Büchsen 22 und 23 angebracht, die auf einer Platte 24 festgeschweisst sind, worin an der Stelle des Vorsprunges 18 ein geeignetes Loch 25 angebracht ist. Die Welle 20 ist axial unverstellbar im Verhältnis zu den Büchsen 22 und 23, was zum Beispiel erreicht wird durch das Anbringen von Federn 26 und 27.

Mit jeder Büchse 22-23 beziehungsweise mit der Platte 24 sind Backen verbunden, zum Beispiel durch Laschen 28 und 29, wobei diese Backen durch Spindeln 30 und 31 frei gelenkig mit dem obengenannten Steuerarm 3 beziehungsweise mit dem obengenannten Tragarm 2 verbunden sind.

Die eigentliche Bohrvorrichtung ist zwischen den obengenannten Wänden 9 und 10 angebracht und besteht in der Hauptsache aus zwei zwischen den obengenannten Platten 11 und 13 befestigten Führungen 32 und 33, worüber sich ein Schlitten 34 verschieben kann. Dieser Schlitten besteht in der Hauptsache aus zwei Büchsen 35 und 36, die durch in diesem Falle drei Platten 37-38 und 39 miteinander verbunden sind, worauf die verschiedenen Bestandteile befestigt sind.

Diese Bestandteile bestehen in der Hauptsache aus dem eigentlichen hohlen Bohrer 40, der unten mit Zähnen 41 versehen ist; einer Wasserzufuhrvorrichtung 42; einer geeigneten Kupplung 43 und einen hydraulischen Motor 44. Dieser hydraulische Motor (oder Wassermotor) ist selbstverständlich durch eine Welle über die obengenannte Kupplung 43 mit dem hohlen Bohrer 40 verbunden, während die Vorrichtung 42 durch einen Schlauch 45 mit einer Flüssigkeitsquelle verbunden ist, um zu erreichen, dass während des Bohrens über einen Durchgang 46 in der Welle 47 Bohrflüssigkeit, meistens Wasser, in das Innere des Bohrers geführt wird.

Der Schlitten 34 ist ferner mit einem oder mehreren doppeltwirkenden oder einzelwirkenden Druckzylindern verbunden, um die auf- und abgehende Bewegung des Bohrers 40 im Verhältnis zum Gerippe 8 regeln zu können.

In diesem Fall werden zwei einzelwirkende Druckzylinder 48 und 49 gebraucht, wovon einer oben mit dem Gerippe 8 und unten mit dem Schlitten 34 und der zweite unten mit dem Gerippe 8 und oben mit dem Schlitten 34 verbunden ist. Man erreicht somit, dass einer der Zylinder dienlich ist, um die nach unten gerichtete Bewegung des Bohrers 40 zu steuern, während der andere dazu dient, die nach oben gerichtete Bewegung zu steuern.

Es ist klar, dass auf diese Weise eine Vorrichtung erhält, die in sehr einfacher Weise auf ein Rohr B angesetzt werden kann, selbst wenn sich dieses Rohr in einer tiefen Grube befindet, und zwar ohne dass die Vorrichtung zusätzlich in Hinsicht auf dieses Rohr befestigt werden muss. Durch die Kugelgelenkaufhängung 21 der Vorrichtung an der Hubvorrichtung erreicht man, dass sich diese Vorrichtung automatisch in die richtige Lage im Verhältnis zum Rohr B setzt, wonach es genügt, Wasser an den Bohrkopf zu führen, den Wassermotor 44 anzutreiben und den Druckzylinder 47 zu betätigen, um die gewünschte Öffnung zu bohren.

Es ist klar, dass die heutige Erfindung keineswegs auf die als Beispiel beschriebene und in den beigefügten Zeichnungen wiedergegebene Ausführung beschränkt ist, sondern dass eine solche Vorrichtung in mancherlei Gestalt und vielerlei Abmessungen verwirklicht werden kann, ohne aus dem Rahmen der Erfindung zu fallen.

Ansprüche.

1.- Hydraulische Kernbohrvorrichtung mit dem Kennzeichen, dass sie hauptsächlich besteht aus der Kombination eines Gerippes (8); Mitteln, die dieses Gerippe (8) einstellbar mit den Armen (2-3) einer Baggermaschine oder dergleichen befestigen; Mitteln, die es ermöglichen, das Gerippe (8) auf geeignete Weise in Position im Verhältnis zu dem Rohr oder dergleichen (B), worin ein Loch angebracht werden muss, zu bringen; und senkrecht bewegbar in dem obengenannten Gerippe (8) einem hohlen Kernbohrer (40) besteht, wobei letzterer durch einen Wassermotor (44) angetrieben wird und zusammen mit diesem Motor (44) auf einen Schlitten (34) gestellt ist, wovon der Höhenstand positiv gesteuert wird.

2.- Hydraulische Kernbohrvorrichtung gemäss Anspruch 1, mit dem Kennzeichen, dass die Mittel, womit das Gerippe (8) an die Baggermaschine oder dergleichen befestigt ist, durch ein Kugelgelenk (21) gebildet werden.

3.- Hydraulische Kernbohrvorrichtung gemäss Anspruch 1 oder 2, mit dem Kennzeichen, dass auf der oberen Wand (13) des Gerippes (8) ein Vorsprung (18) vorgesehen ist, worin eine Kugel (21) angebracht ist, und wobei durch diese Kugel (21) hindurch eine Welle (20) geht, worauf frei drehbar eine Stütze angebracht ist, die selbst gelenkig mit den Enden der Arme (2-3) einer Baggermaschine oder dergleichen befestigt ist.

4.- Hydraulische Kernbohrvorrichtung gemäss Anspruch 1, mit dem Kennzeichen, dass die Mittel, die das Inpositionbringen der Kernbohrvorrichtung auf dem Rohr oder dergleichen (B) ermöglichen, durch an die auf der unteren Wand (11) und an die zwei einander gegenüber liegenden Seiten des Gerippes (8) befestigte, nach unten gerichtete Vorsprünge (14-15) gebildet werden, die je mit einer kreisförmigen Ausschneidung (16-17) versehen sind.

5.- Hydraulische Kernbohrvorrichtung gemäss Anspruch 1, mit dem Kennzeichen, dass das Gerippe (8) hauptsächlich aus einer oberen (13) und einer unteren Platte (11) besteht, die auf geeignete Weise miteinander verbunden sind, wobei zwischen dieser unteren Platte (11) und der oberen Platte (13) mindestens zwei Führungen (32-33) vorgesehen sind, worüber sich ein Schlitten (34) bewegen kann, und wobei in diesem Schlitten (34) eine senkrechte Welle gelagert ist, die durch einen auf dem Schlitten befestigten Wassermotor (44) angetrieben wird und die unten mit einem hohlen Kernbohrer (40) versehen ist, der durch eine zu diesem Zweck in der unteren Platte (11) des Gerippes (8) vorgesehene Öffnung (12) hindurchgeht.

6.- Hydraulische Kernbohrvorrichtung gemäss Anspruch 5, mit dem Kennzeichen, dass die obengenannte Welle, die den Motor (44) mit dem Kernbohrer (40) verbindet, unterbrochen und dort mit einer geeigneten Kupplung (43) versehen ist.

7.- Hydraulische Kernbohrvorrichtung gemäss einem der obigen Ansprüche, mit dem Kennzeichen, dass auf der obengenannten Welle eine Wasserzufuhrvorrichtung (42) vorgesehen ist, woran eine Wasserzufuhrleitung (45) angeschlossen ist, und wobei die Wasserzufuhrvorrichtung (42) über einen Durchlass in der Antriebswelle des Kernbohrers (40) Flüssigkeit diesem Kernbohrer (40) zuführen kann.

8.- Hydraulische Kernbohrvorrichtung gemäss einem der obigen Ansprüche, mit dem Kennzeichen, dass der obengenannte Schlitten (34) durch zwei einzelwirkende Druckzylinder (48-49) angetrieben wird, wovon der eine an der oberen Wand (13) des Gerippes (8) einerseits und am Schlitten (34) andererseits befestigt ist, während der zweite an der unteren Wand des Gerippes (8) einerseits und am Schlitten (34) andererseits befestigt ist.

9.- Hydraulische Kernbohrvorrichtung gemäss einem der Ansprüche 1 bis 7, mit dem Kennzeichen, dass zwischen dem oberen Ende (13) oder dem unteren Ende (11) des Gerippes (8) und
dem obengenannten Schlitten (34) ein doppeltwirkender Zylinder angebracht ist.

Fig. 1

Fig. 2

Fig. 3

Fig. 4